# FASCICULE DE BREVET EUROPEEN

(11) **EP 1 922 251 B1**
(45) Date de publication et mention de la délivrance du brevet: **06.05.2009**
(21) Numéro de dépôt: 06808245.2
(22) Date de dépôt: 17.08.2006
(51) Int. Cl.: B64D 29/08

(54) **CAPOT DE NACELLE POUR TURBOREACTEUR ET NACELLE COMPORTANT AU MOINS UN TEL CAPOT**
GONDELVERKLEIDUNG FÜR EINE STRAHLTURBINE UND GONDEL MIT MINDESTENS EINER DERARTIGEN VERKLEIDUNG
NACELLE COWLING FOR TURBOJET AND NACELLE COMPRISING AT LEAST ONE SUCH COWLING

(30) Priorité: 08.09.2005 FR 0552717
(43) Date de publication de la demande: 21.05.2008
(73) Titulaire: AIRBUS France, 31060 Toulouse Cédex (FR)
(72) Inventeur: MARCHE, Hervé, F-31120 Roquettes (FR)
(74) Mandataire: Lebrette, Camille
(86) Numéro de dépôt international: PCT/FR2006/050804
(87) Numéro de publication internationale: WO 2007/028916

(56) Documents cités:
- GB-A- 2 403 774
- US-A- 3 333 772
- US-A- 3 493 178
- US-A- 5 673 874
- US-B1- 6 179 249

## Description

L'invention concerne un capot de nacelle pour turboréacteur d'aéronef. Plus précisément l'invention concerne un capot de nacelle apte à avoir au moins une position fermée, dans laquelle le capot recouvre complètement un turboréacteur logé dans la nacelle, et une position ouverte, dans laquelle le capot est éloigné du turboréacteur, de manière à permettre un accès audit turboréacteur.

La nacelle d'un turboréacteur pour aéronef comporte généralement deux capots, respectivement capot droit et capot gauche placés de part et d'autre de la soufflante du turboréacteur. Chaque capot a une section en arc de cercle selon un plan transversal de la nacelle, suivant un contour externe semi-circulaire d'un flanc droit et d'un flanc gauche du turboréacteur, cf GB 2 403 774.

Généralement, au moins un des deux capots de la nacelle peut être ouvert de manière à permettre un accès à différents équipements et systèmes logés à l'intérieur de la nacelle. Pour cela, le bord supérieur du capot est articulé sur la partie supérieure du turboréacteur. Par exemple, le bord supérieur du capot est monté en rotation sur la partie supérieure du turboréacteur de manière à autoriser le pivotement dudit capot depuis une position basse dans laquelle il épouse le contour externe d'un flanc du turboréacteur, jusqu'à une position haute dans laquelle il est surélevé par rapport au turboréacteur. Un tel pivotement du bas vers le haut dégage un accès à l'intérieur de la nacelle, qui permet la maintenance du turboréacteur. Lorsque l'avion est en vol, les capots sont fermés et présentent une forme telle qu'ils assurent la continuité aérodynamique de la nacelle dans son ensemble.

Afin de garantir la fermeture du capot, le bord inférieur dudit capot est muni d'un système de verrouillage permettant de maintenir le capot en position fermée à la fin de la séance de maintenance et plus particulièrement lors d'un vol. Un tel mécanisme de verrouillage est nécessaire pour éviter l'ouverture intempestive du ou des capots lors d'un vol. En effet, lorsque l'aéronef est en vol plusieurs facteurs, tels que l'écoulement aérodynamique sur les capots, les surpressions éventuelles provoquées par l'éclatement de tuyauteries internes au moteur ou encore la présence de dispositifs de ventilation, exercent des forces sur les capots tendant à les ouvrir. Lorsqu'un capot s'étend en position ouverte en plein vol, il est aisément arraché de la nacelle. Cela peut notamment survenir lorsque le personnel de piste a oublié de fermer un ou plusieurs des verrous du système de verrouillage. Le turboréacteur n'est plus protégé et le capot s'écrase au sol, de manière non contrôlable.

Aussi, les capots ouvrants actuels ne donnent pas entière satisfaction dans la mesure où, du fait d'une erreur humaine, lesdits capots peuvent s'ouvrir et/ou être arrachés de la nacelle.

Dans l'invention, on cherche à résoudre le problème cité ci-dessus en proposant un capot de nacelle apte à avoir une position fermée et une position ouverte, et qui ne risque pas de s'ouvrir de manière intempestive lorsqu'un aéronef muni de ladite nacelle est en vol.

Pour cela l'invention propose de munir une nacelle de turboréacteur d'au moins un capot amovible, formé de deux parties indépendantes aptes à coulisser l'une par rapport à l'autre de manière à dégager un accès à l'intérieur de la nacelle. Plus précisément une première partie du capot est fixe par rapport au reste de la nacelle et au turboréacteur, tandis que la deuxième partie est apte à être translatée le long de la première partie pour dégager un accès à une ouverture. Selon les besoins, il est possible de prévoir plusieurs degrés d'ouverture du capot, la partie mobile étant plus ou moins superposée à la partie fixe. Plus la partie mobile est superposée à la partie fixe, plus l'ouverture dégagée est grande, et inversement.

Préférentiellement, la partie fixe et la partie mobile du capot selon l'invention sont ménagées dans la hauteur dudit capot. Par hauteur, on entend la dimension du capot s'étendant verticalement par rapport à l'axe du turboréacteur. Ainsi, lors d'un vol, la poussée exercée sur la nacelle du turboréacteur par un flux d'air externe ne risque pas d'ouvrir de manière accidentelle le ou les capots amovibles de ladite nacelle, ce qui pourrait avoir lieu si les parties fixe et mobile du capot s'étendaient dans la longueur dudit capot. Par longueur, on entend la dimension du capot s'étendant parallèlement à l'axe du turboréacteur.

Dans la mesure où la plupart du temps les divers systèmes et accessoires auxquels il faut avoir accès dans le turboréacteur sont situés en partie basse du turboréacteur, il peut être intéressant de ménager la partie mobile du capot au niveau de la partie inférieure de la nacelle et la partie fixe au niveau de la partie supérieure. Par partie inférieure, ou partie basse, on entend d'une manière générale la partie de l'élément considéré située au-dessous de l'axe du turboréacteur logé dans la nacelle. Par partie supérieure, ou partie haute on entend d'une manière générale la partie de l'élément considéré située au-dessus de l'axe du turboréacteur logé dans la nacelle.

La partie mobile peut coulisser, par rapport à la partie fixe, à la manière d'un volet roulant. Par exemple, la partie mobile coulisse à l'intérieur de la nacelle, ce qui permet de ne pas créer de traînée aérodynamique, ou très peu. En effet, les moyens de coulissement sont ménagés sur une partie interne du capot de nacelle, et donc ne perturbent pas l'écoulement aérodynamique à l'extérieur de la nacelle.

Afin de faciliter l'ouverture et la fermeture du capot selon l'invention, il est possible de prévoir une ou plusieurs poignées, disposées sur la face externe de la partie mobile du capot, et permettant de prendre en main ladite partie mobile et de la soulever ou de l'abaisser aisément.

L'invention prévoit également un système de verrouillage permettant de maintenir le capot selon l'invention d'une part en position fermée lorsque l'aéronef est en vol, et d'autre part en position ouverte lorsqu'une maintenance de la nacelle doit être effectuée. Ainsi, on évite au capot de la nacelle de se refermer de manière intempestive en coulissant vers la position fermée alors que quelqu'un est en train de pratiquer une maintenance. Par ailleurs, un tel système bivalent permet un gain de place et de masse dans la nacelle. Par bivalent, on entend apte à remplir deux fonctions différentes et indépendantes.

L'invention a donc pour objet un capot de nacelle pour turboréacteur, **caractérisé en ce qu**'il est muni d'une partie fixe et d'une partie mobile s'étendant l'une au dessus de l'autre, la partie mobile étant apte à coulisser le long de la partie fixe, depuis une position fermée dans laquelle la partie mobile s'étend dans le prolongement de la partie fixe, jusqu'à une position ouverte dans laquelle la partie mobile est au moins partiellement superposée à la partie fixe.

Selon des exemples de réalisation du capot de nacelle selon l'invention, il est possible d'ajouter tout ou partie des caractéristiques supplémentaires suivantes :
- la partie fixe est située en partie supérieure du capot, la partie mobile étant située en partie inférieure dudit capot ;
- la partie mobile comporte des moyens d'engagement aptes à s'engager dans des rails de guidage du coulissement, lesdits rails de guidage étant montés fixes dans la nacelle ;
- la partie mobile du capot coulisse le long d'une face interne de la partie fixe dudit capot ;
- la partie mobile est munie d'au moins une poignée supérieure située en partie supérieure de la partie mobile et d'au moins une poignée inférieure située en partie inférieure de la partie mobile ;
- au moins une poignée supérieure et/ou inférieure est escamotable ;
- le capot comporte un dispositif de verrouillage apte à verrouiller la partie mobile du capot en position fermée et/ou ouverte ;
- le dispositif de verrouillage comporte des picots, situés sur une face interne de la partie mobile du capot, lesdits picots étant destinés à être insérés dans des orifices ménagés sur des montants fixes de la nacelle;
- le dispositif de verrouillage est actionné par au moins une poignée située sur la partie mobile du capot.

L'invention concerne également une nacelle munie d'au moins un capot selon l'invention. Préférentiellement les deux capots de la nacelle sont conformes au capot de l'invention.

L'invention sera mieux comprise à la lecture de la description qui suit et à l'examen des figures qui l'accompagnent. Celles-ci sont présentées à titre indicatif et nullement limitatif de l'invention. Les figures représentent :
- Figure 1 : une représentation schématique d'une nacelle munie d'un capot selon l'invention ;
- Figure 2A,2B et 2C : des représentations schématiques d'un capot selon l'invention à différents stades de fermeture et d'ouverture ;
- Figure 3 : une représentation schématique d'un exemple de système de verrouillage d'un capot de nacelle selon l'invention.

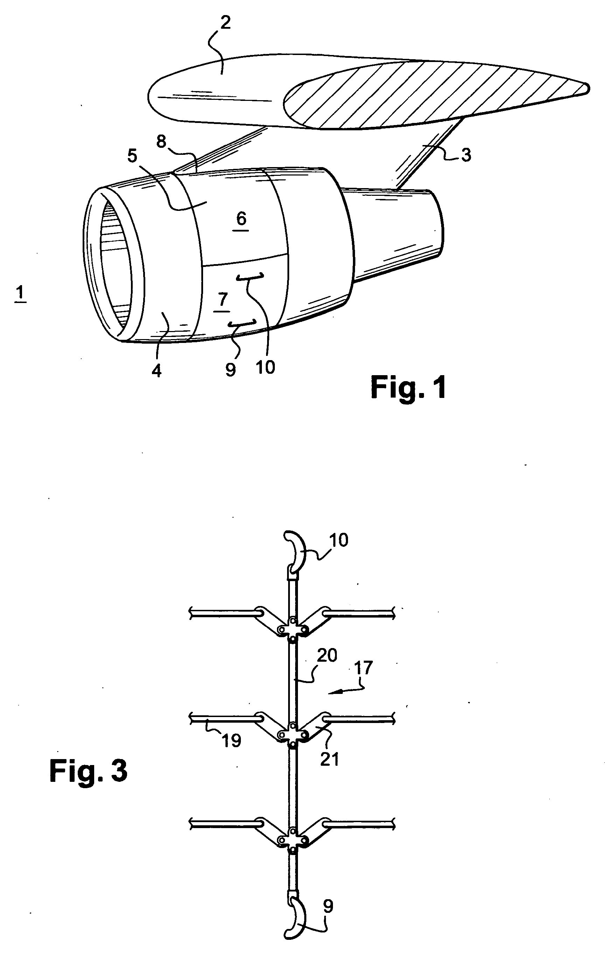

Sur la figure 1 est représentée une nacelle 1 fixée à une voilure 2 par un mât de fixation 3. La nacelle 1 comporte un carter de soufflante 4 ainsi que deux capots 5 (un seul capot visible sur la figure 1) formant respectivement le capot gauche et le capot droit de la nacelle 1. Chaque capot 5 a une forme générale en demi-cercle.

Le capot 5 représenté à la figure 1 est en position fermée. Plus précisément, une partie fixe 6 supérieure et une partie mobile 7 inférieure du capot 5 s'étendent l'une au-dessus de l'autre, de manière à suivre le contour en arc de cercle, ou demi-cercle, de la nacelle 1. La surface externe du capot 5 suit un profil aérodynamique de la nacelle 1 dans son ensemble. Un bord supérieur 8 de la partie fixe 6 est solidarisé au mât de fixation 3. Par exemple, le bord supérieur 8 de la partie fixe 6 est vissé au mât de fixation 3. Ainsi la partie fixe 6 du capot 5 est immobile par rapport au reste de la nacelle 1. A l'inverse, la partie mobile 7 inférieure n'est solidarisée à aucune partie fixe de la nacelle 1 ou du mat de fixation 3.

La partie mobile 7 du capot 5 est munie d'une poignée inférieure 9 et d'une poignée supérieure 10, qui facilitent la prise en main de la partie mobile 7 du capot, afin de la faire passer de la position fermée telle que représentée à la figure 1, à une position ouverte et inversement. La poignée inférieure 9 est dirigée vers le sol, tandis que la poignée supérieure 10 est dirigée vers la partie fixe 6 du capot 5.

Il est possible de prévoir qu'une des deux poignées 9, 10, ou les deux, soient escamotables. Ainsi, dans le cas où la partie mobile 7 du capot 5 coulisse sous la partie fixe 6, vers l'intérieur de la nacelle 1, la présence des poignées ne gène pas le coulissement. D'une manière générale, par interne ou intérieur, on entend dirigé vers l'intérieur de la nacelle, et par externe ou extérieur, dirigé vers l'extérieur de la nacelle. De plus, en vol, les poignées 9 et 10 escamotables ne forment pas de protubérances sur la surface externe de la partie mobile 7 du capot 5, qui pourraient perturber l'écoulement de l'air à l'extérieur de la nacelle 1.

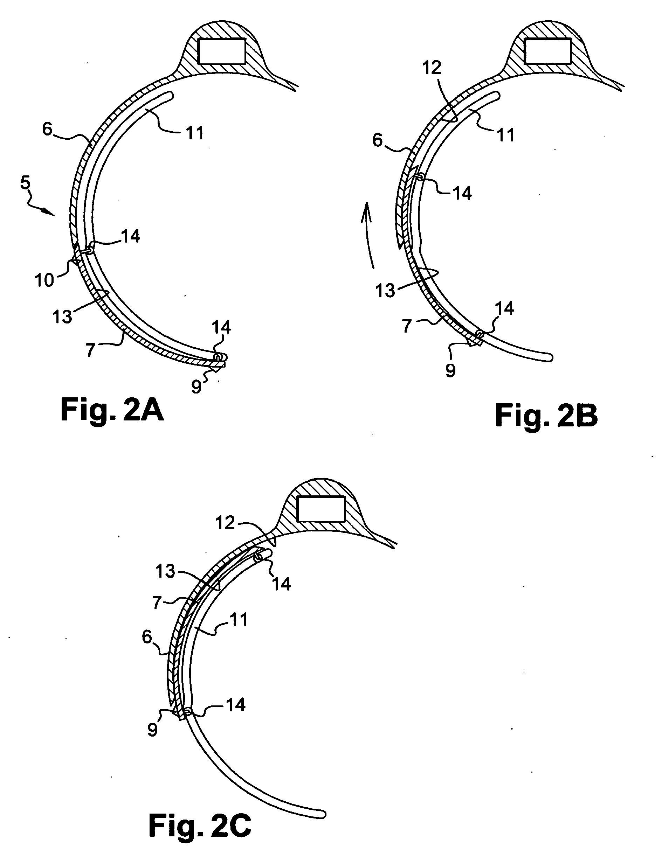

Sur les figures 2A, 2B et 2C, est représentée une coupe transversale partielle de la nacelle 1 au niveau d'un capot 5 de l'invention, respectivement en position fermée (figure 2A), en position partiellement ouverte (figure 2B) et en position ouverte (figure 2C).

Le capot 5, en forme de demi-cercle, suit un contour externe d'un turboréacteur (non représenté) situé à l'intérieur de la nacelle 1. Plus précisément, la partie fixe 6 et la partie mobile 7 du capot 5, en forme d'arc de cercle, suivent respectivement le contour externe d'un portion supérieure et d'une portion inférieure d'un flanc du turboréacteur.

En position fermée, telle que représentée sur la figure 2A, la partie mobile 7 inférieure du capot 5, s'étend dans le prolongement inférieur de la partie fixe 6 supérieure du capot 5. La partie fixe 6 et la partie mobile 7 du capot 5 sont ménagées dans la hauteur H dudit capot 5, l'une en dessous de l'autre.

Lorsqu'on désire avoir accès au volume interne de la nacelle, on fait coulisser la partie mobile 7 du capot 5 le long de la partie fixe 6. Dans l'exemple représenté aux figures 2B et 2C, la partie mobile 7 du capot 5 coulisse le long d'une paroi interne 12 de la partie fixe 6 dudit capot 5. Ainsi, la partie mobile 7 du capot 5 est disposée entre la partie fixe 6 du capot 5 et le turboréacteur logé dans la nacelle 1, lorsque le capot 5 est en position ouverte, comme cela est représenté sur la figure 2C. La partie mobile 7 et la partie fixe 6 du capot 5 sont donc superposées. Il est alors possible d'avoir accès à la partie basse du turboréacteur, où se trouve l'ensemble de la machinerie nécessitant une maintenance.

Lorsqu'on souhaite ouvrir le capot 5 de la nacelle 1, et dans la mesure où la partie mobile 7 du capot 5 est munie d'une poignée inférieure 9 et d'une poignée supérieure 10, il est possible d'entamer l'ouverture du capot 5 en poussant la partie mobile 7 dudit capot 5 vers le haut, au moyen de la poignée supérieure 10, puis de continuer à pousser la partie mobile 7 le long de la partie fixe 6 au moyen de la poignée 9 lorsque la poignée 10 n'est plus accessible. Dans le cas où la partie mobile 7 du capot 5 coulisse sous la partie fixe 6, la poignée supérieure 10 n'est plus accessible lorsque la portion de la partie mobile 7 portant cette poignée supérieure 10 passe en dessous de la partie fixe 6. Dans le cas où la partie mobile 7 du capot 5 coulisse au-dessus de la partie fixe 6, la poignée supérieure 10 n'est plus accessible lorsqu'elle est située trop haut pour l'utilisateur chargé de la maintenance du turboréacteur.

Lorsque la maintenance est terminée, il suffit de tirer la partie mobile 7 du capot 5 vers le bas, par l'intermédiaire de la poignée inférieure 9, jusqu'à la position capot fermé telle que représentée à la figure 2A. Bien entendu, la phase de fermeture du capot 5 peut se faire dans un premier temps au moyen de la poignée inférieure 9, puis au moyen de la poignée supérieure 10 lorsqu'elle devient à nouveau accessible aux utilisateurs, et ce afin qu'il soit plus aisé de tirer la partie mobile 7 du capot 5 vers le bas.

Dans un exemple particulier de réalisation, et tel que cela est représenté sur les figures 2A, 2B et 2C, la partie mobile 7 du capot 5 coulisse le long de la face interne 12 de la partie fixe 6 du capot 5 par l'intermédiaire de deux rails de guidage 11 du coulissement. Les rails de guidage 11 sont montés fixes à l'intérieur de la nacelle. Par exemple, les extrémités basse et haute du rail de guidage avant sont solidarisées au capot de carter, tandis que les extrémités basse et haute du rail de guidage arrière sont solidarisées au capot d'inverseur de poussée. Par avant et arrière, on entend par rapport au sens d'avancement d'un aéronef muni d'une telle nacelle 1. La trajectoire des rails de guidage 11 suit le contour en arc de cercle des parties mobile 6 et fixe 7 du capot 5. Ainsi les rails de guidage 11 sont adaptés à la trajectoire souhaitée pour la partie mobile 7 du capot 5.

La partie mobile 7 du capot 5 est munie sur une face interne 13 destinée à venir en vis-à-vis des rails de guidage 11, de deux rangées de moyens d'engagement 14 (une seule rangée visible sur les figures 2A, 2B et 2C) aptes à s'engager dans les rails de guidage 11, de manière à guider le coulissement de la partie mobile 7 du capot 5 le long de la partie fixe 6 dudit capot 5. Par exemple, les moyens d'engagement 14 sont des galets disposés par paires, de part et d'autre des rails de guidage 11. Chaque rail de guidage 11 coïncide avec au moins deux paires de galets 14 sur la face interne 13 de la partie mobile 7 dudit capot 5. Dans l'exemple représenté, chaque rail de guidage 11 coïncide avec deux moyens d'engagement 14, situés respectivement en parte haute et basse de la partie mobile 7 du capot 5. Bien entendu, il est possible de munir la face interne 13 de la partie mobile 7 du capot 5 de trois, quatre ou plus moyens d'engagement 14 par rail 11 de manière à assurer un bon guidage du coulissement de la partie mobile 7 le long de la partie fixe 6 du capot 5. Dans un autre exemple de réalisation, le coulissement peut être obtenu au moyen de rainures dans lesquelles viennent s'engager des protubérances longilignes lesdites rainures et protubérances étant disposées de manière à coïncider.

Avantageusement, la face interne 13 de la partie mobile 7 du capot 5 est munie d'un dispositif de verrouillage permettant de maintenir, selon les besoin, ladite partie mobile 7 en position basse ou haute et donc en position fermée et/ou en position ouverte le capot 5.

Par exemple, le dispositif de verrouillage peut comporter un système de tringlerie 17 tel que représenté à la figure 3. Le dispositif de verrouillage selon l'invention comporte par ailleurs des petits orifices ménagés sur des montants avant et arrière fixe de la nacelle (non représentés), ces dits orifices étant aptes à recevoir des picots 19 de blocage du système de tringlerie 17. Notamment, les orifices peuvent être ménagés sur les rails de guidage 11 le long desquels la partie mobile 7 du capot 5 coulisse.

Le système de tringlerie 17 comporte une tige 20, disposée dans l'épaisseur de la partie mobile 7 du capot 5, et légèrement incurvée de manière à épouser le contour en arc de cercle de ladite partie mobile 7. La tige 20 s'étend dans la hauteur H de la partie mobile 7 du capot 5. La tige 20 est munie de plusieurs paires de bielles 21 (trois seulement sont représentées sur la figure 4) espacées régulièrement le long de ladite tige 20. Chaque bielle 21 est reliée, à l'endroit d'une extrémité libre opposée à l'extrémité reliée à la tige 20, à un picot 19 de blocage. Chaque paire de bielles comporte une bielle 21 avant et une bielle 21 arrière.

Le système de tringlerie 17 selon l'invention permet d'engager les picots 19 avant, solidaires des bielles 21 avant, dans des orifices ménagés sur le rail de guidage 11 avant, et les picots 19 arrières, solidaires des bielles 21 arrières, dans des orifices similaires ménagés sur le rail de guidage 11 arrière. Par exemple, la tige 20 est située au milieu de la partie mobile 7 du capot 5, de sorte que les picots 19 doivent avoir une longueur suffisante pour pouvoir atteindre les rails 11 sur lesquels les orifices sont ménagés. Notamment, les rails de guidage 11 peuvent coïncider avec les bords extérieurs de la partie mobile 7 du capot 5, les picots 19 devant alors chacun s'étendre sur une demi largeur de ladite partie mobile 7 pour atteindre les rails de guidage 11 avant et arrière et donc les orifices.

En position capot fermé, le dispositif de verrouillage selon l'invention permet de maintenir la partie mobile 7 du capot 5 en partie inférieure dudit capot 5, par l'intermédiaire des picots 19 insérés dans les orifices situés en partie basse des rails 11 de guidage. En position capot ouvert, le dispositif de verrouillage selon l'invention permet de maintenir la partie mobile 7 du capot 5 en position haute par l'intermédiaire des mêmes 19 insérés dans des orifices situés en partie haute des rails 11 de guidage.

Dans l'exemple représenté à la figure 3, le système de tringlerie 17 de l'invention est actionné par l'intermédiaire d'au moins une des deux poignées 9, 10 situées sur la partie mobile 7 du capot 5. Les poignées 9 et 10 permettent de verrouiller et déverrouiller le système de tringlerie 17. En position déverrouillée, les bielles 21 sont rétractées et s'étendent dans le prolongement de la tige 20, de sorte que les picots 19 s'effacent pour ne pas gêner le coulissement de la partie mobile 7 du capot 5 le long de la partie fixe 6. A l'inverse, en position verrouillée, les bielles 21 s'étendent sensiblement perpendiculairement à la tige 20, les picots 19 étant alors déployés axialement, les uns vers l'avant, les autres vers l'arrière, de manière à être insérés dans les orifices correspondants ménagés dans les 11 de guidage avant et arrière.

Par exemple, lorsque la partie mobile 7 du capot 5 est située en partie basse et que le capot 5 est en position fermée, il est possible de déverrouiller le système de tringlerie 17 par l'intermédiaire de la poignée supérieure 10, en tournant d'un quart de tour ladite poignée 10. La tige 20 est alors tirée vers le haut rétractant ainsi les bielles 21 et picots 19 correspondants. Les picots internes 19 sont dégagés des orifices situés en partie basse des rails 11 de guidage, autorisant le coulissement de la partie mobile 7 vers le haut, le long de la partie fixe 6 du capot 5. Lorsque la poignée supérieure 10 disparaît à l'intérieur de la nacelle 1, la remontée de la partie mobile 7 du capot 5 le long de la partie fixe 6 se fait à l'aide de la poignée inférieure 9. Lorsque la partie mobile 7 du capot 5 a une position souhaitée par rapport à la partie fixe 6 dudit capot 5, on verrouille à nouveau le système de tringlerie 17 en tournant d'un quart de tour la poignée inférieure 9, afin de tirer la tige 20 vers ladite poignée inférieure 9, ce qui permet le déploiement des bielles 21 et des picots 19 vers les orifices ménagés à cet effet dans la partie supérieure des rails 11 de guidage avant et arrière.

Lorsqu'on souhaite à nouveau fermer le capot 5, il suffit de tourner la poignée inférieure 9 d'un quart de tour en sens inverse, de manière à pousser vers le haut la tige 20 et ainsi rétracter les bielles 21 et picots 19. La partie mobile 7 du capot 5 retrouve alors sa mobilité. On peut ensuite tirer la partie mobile 7 du capot 5 vers le bas, au moyen de la poignée inférieure 9 puis de la poignée supérieure 10 lorsque celle-ci est désengagée de dessous la partie fixe 6 du capot 5.

Pour verrouiller en position fermée la partie mobile 7 du capot 5, on tourne d'un quart de tour la poignée supérieure 10, de manière à étendre à nouveau les bielles 21 et les picots 19 du système de tringlerie 20.

Dans les exemples représentés aux figures 1 et 2, les dimensions de la partie mobile 7 du capot 5 sont sensiblement égales aux dimensions de la partie fixe 6 dudit capot 5. Il est également possible de prévoir une partie mobile 7 dont les dimensions sont strictement inférieures aux dimensions de la partie fixe 6 du capot 5. Par exemple, la partie mobile 7 du capot 5 a une hauteur strictement inférieure à la hauteur de la partie fixe 6. De même, il est possible que la longueur de la partie mobile 7 du capot 5 soit inférieure à la longueur de la partie fixe 6.

## Revendications

1. Capot (5) de nacelle pour turboréacteur, le capot étant muni d'une partie fixe (6) et d'une partie mobile (7) s'étendant l'une au dessus de l'autre, **caractérisé en ce que** la partie mobile est apte à coulisser le long de la partie fixe, depuis une position fermée dans laquelle la partie mobile s'étend dans le prolongement de la partie fixe, jusqu'à une position ouverte dans laquelle la partie mobile est au moins partiellement superposée à la partie fixe.

2. Capot de nacelle selon la revendication 1, **caractérisé en ce que** la partie fixe est située en partie supérieure du capot, la partie mobile étant située en partie inférieure dudit capot.

3. Capot de nacelle selon l'une des revendications 1 à 2, **caractérisé en ce que** la partie mobile comporte des moyens d'engagement (14) aptes à s'engager dans des rails (11) de guidage du coulissement, lesdits rails de guidage pouvant être montés fixes dans la nacelle.

4. Capot de nacelle selon l'une des revendications 1 à 3, **caractérisé en ce que** la partie mobile du capot coulisse le long d'une face interne (12) de la partie fixe dudit capot.

5. Capot de nacelle selon l'une des revendications 1 à 4, **caractérisé en ce que** la partie mobile est munie d'au moins une poignée supérieure (10) située en partie supérieure de la partie mobile et d'au moins une poignée inférieure (9) située en partie inférieure de la partie mobile.

6. Capot de nacelle selon la revendication 5, **caractérisé en ce qu'**au moins une poignée supérieure et/ou inférieure est escamotable.

7. Capot de nacelle selon l'une des revendications 1 à 6, **caractérisé en ce qu'**il comporte un dispositif de verrouillage (17, 19, 20, 21) apte à verrouiller la partie mobile du capot en position fermée et/ou ouverte.

8. Capot de nacelle selon la revendication 7, **caractérisé en ce que** le dispositif de verrouillage comporte des picots (19) situés sur une face interne (13) de la partie mobile du capot, lesdits picots étant destinés à être insérés dans des orifices ménagés sur des montants fixes de la nacelle

9. Capot de nacelle selon l'une des revendications 7 à 8, **caractérisé en ce que** le dispositif de verrouillage est actionné par au moins une poignée (9, 10) située sur la partie mobile du capot.

10. Nacelle (1) de turboréacteur munie d'au moins un capot (5) selon l'une des revendications 1 à 9.

## Claims

1. A nacelle cowling (5) for turbojet, the cowling being equipped with a fixed part (6) and a mobile part (7) extending one above the other, **characterised in that** the mobile part is able to slide along the fixed part from a closed position, wherein the mobile part extends along the fixed part extension up to an open position, wherein the mobile part is at least partly superimposed on the fixed part.

2. A nacelle cowling according to claim 1, **characterised in that** the fixed part is situated in the upper part of the cowling, the mobile part being situated in the lower part of the said cowling.

3. A nacelle cowling according to one of the claims 1 to 2, **characterised in that** the mobile part comprises a means of engagement (14) that is able to be fitted into the guide rails (11) of the runners, such guide rails being able to be fixed inside the nacelle.

4. A nacelle cowling according to one of the claims 1 to 3, **characterised in that** the mobile part of the cowling slides along an internal face (12) of the fixed part of the said cowling.

5. A nacelle cowling according to one of the claims 1 to 4, **characterised in that** the mobile part is equipped with at least one upper handle (10), situated in the upper part of the mobile part, and at least one lower handle (9), situated in the lower part of the mobile part.

6. A nacelle cowling according to claim 5, **characterised in that** at least one upper and/or lower handle is retractable.

7. A nacelle cowling according to one of the claims 1 to 6, **characterised in that** it comprises a locking system (17, 19, 20, 21) enabling the mobile part of the cowling to be locked in a closed and/or an open position.

8. A nacelle cowling according to claim 7, **characterised in that** the locking system comprises spikes (19) located on an inner face (13) of the mobile part of the cowling, the said spikes having the purpose of being inserted into the gaps created on the nacelle's fixed uprights.

9. A nacelle cowling according to one of the claims 7 to 8, **characterised in that** the locking system is activated by at least one handle (9, 10) situated on the mobile part of the cowling.

10. A turbojet nacelle (1) equipped with at least one cowling (5) in accordance with one of the claims 1 to 9.

## Patentansprüche

1. Gondelverkleidung (5) für ein Turbotriebwerk, **dadurch gekennzeichnet, dass** die Verkleidung über einen festen Abschnitt (6) und einen beweglichen Abschnitt (7) verfügt, wobei einer über dem anderen liegt, und **dadurch gekennzeichnet, dass** der bewegliche Abschnitt in der Lage ist, entlang des festen Abschnitts zu gleiten, von einer geschlossenen Position aus, in der sich der bewegliche Abschnitt in der Verlängerung des festen Abschnitts erstreckt, bis zu einer offenen Position, in der der bewegliche Abschnitt den festen Abschnitt zumindest teilweise überlagert.

2. Gondelverkleidung nach Anspruch 1, **dadurch gekennzeichnet, dass** sich der feste Abschnitt im oberen Teil der Verkleidung befindet, und sich der bewegliche Abschnitt im unteren Teil der besagten Verkleidung befindet.

3. Gondelverkleidung nach einem der Ansprüche 1 bis 2, **dadurch gekennzeichnet, dass** der bewegliche Abschnitt Mittel zum Einfädeln (14) enthält, die in der Lage sind, sich in die Führungsschienen (11) des Gleitmechanismus einzufädeln, wobei die besagten Führungsschienen fest in der Gondel verbaut sein können.

4. Gondelverkleidung nach einem der Ansprüche 1 bis 3, **dadurch gekennzeichnet, dass** der bewegliche Abschnitt der Verkleidung entlang einer Innenfläche (12) des festen Abschnitts der besagten Verkleidung gleitet.

5. Gondelverkleidung nach einem der Ansprüche 1 bis 4, **dadurch gekennzeichnet, dass** der bewegliche Abschnitt mit zumindest einem oberen Handgriff (10) ausgestattet ist, der sich im Oberteil des beweglichen Abschnitts befindet, und mit zumindest einem unteren Handgriff (9), der sich im Unterteil des beweglichen Abschnitts befindet.

6. Gondelverkleidung nach Anspruch 5, **dadurch gekennzeichnet, dass** zumindest ein oberer und/ oder unterer Handgriff einziehbar ist.

7. Gondelverkleidung nach einem der Ansprüche 1 bis 6, **dadurch gekennzeichnet, dass** sie eine Verriegelungsvorrichtung (17, 19, 20, 21) enthält, die in der Lage ist, den beweglichen Abschnitt der Verkleidung in der geschlossenen und/ oder offenen Stellung zu verriegeln.

8. Gondelverkleidung nach Anspruch 7, **dadurch gekennzeichnet, dass** die Verriegelungsvorrichtung Stifte (19) enthält, die sich an der Innenseite (13) des mobilen Abschnitts der Verkleidung befinden, wobei die besagten Stifte dazu bestimmt sind, in die Öffnungen eingeführt zu werden, die an den festen Streben der Verkleidung angeordnet sind.

9. Gondelverkleidung nach einem der Ansprüche 7 bis 8, **dadurch gekennzeichnet, dass** die Verriegelungsvorrichtung durch zumindest einen Handgriff (9, 10) betätigt wird, der sich auf dem beweglichen Abschnitt der Verkleidung befindet.

10. Gondel (11) eines Turbotriebwerks mit zumindest einer Verkleidung (5) nach einem der Ansprüche 1 bis 9.
